# EUROPÄISCHE PATENTSCHRIFT

(11) **EP 3 383 710 B1**
(45) Veröffentlichungstag und Bekanntmachung des Hinweises auf die Patenterteilung: **18.09.2019**
(21) Anmeldenummer: 16804784.3
(22) Anmeldetag: 30.11.2016
(51) Int. Cl.: B60R 21/203, B60R 21/26

(54) **FAHRZEUGSICHERHEITSSYSTEM UND VERFAHREN ZUM HERSTELLEN EINES FAHRZEUGSICHERHEITSSYSTEMS**
VEHICLE SAFETY SYSTEM AND METHOD OF MANUFACTURE OF A VEHICLE SAFETY SYSTEM
SYSTÈME DE SECURITÉ POUR VÉHICULES AINSI QU'UN PROCÉDÉ DE FABRICATION D'UN TEL SYSTÈME

(30) Priorität: 03.12.2015 DE 102015015547
(43) Veröffentlichungstag der Anmeldung: 10.10.2018
(73) Patentinhaber: TRW Automotive Safety Systems GmbH, 63743 Aschaffenburg (DE)
(72) Erfinder: ECK, Gregor, 63931 Kirchzell (DE)
(74) Vertreter: ZF TRW Patentabteilung
(86) Internationale Anmeldenummer: PCT/EP2016/079256
(87) Internationale Veröffentlichungsnummer: WO 2017/093303

(56) Entgegenhaltungen:
- EP-A2- 1 020 332
- WO-A1-00/15470
- WO-A1-2005/007461
- DE-A1- 10 331 303
- DE-A1-102007 049 234
- JP-B2- 3 115 914
- US-A1- 2005 212 274
- US-A1- 2010 225 097

## Beschreibung

Die Erfindung betrifft ein Fahrzeugsicherheitssystem, insbesondere ein Airbagsystem sowie ein Verfahren zum Herstellen eines Fahrzeugsicherheitssystems. Das Fahrzeugsicherheitssystem weist ein Halteblech sowie einen Luftsack auf, wobei der Luftsack an dem Halteblech befestigbar ist. Das Fahrzeugsicherheitssystem weist ferner einen Generatorträger und einen Tilger auf, wobei der Tilger zwischen dem Halteblech und dem Generatorträger angeordnet ist.

Das System weist ferner ein Gehäuse sowie einen Tilger auf. Der Tilger ist zwischen einem Gehäuse bzw. einem Halteblech und dem Gasgenerator angeordnet, um Vibrationen und Schwingungen zu dämpfen, die beim Betrieb zum Beispiel eines Kraftfahrzeugs entstehen können und auf den Gasgenerator übertragen werden können.

Ein solches Fahrzeugsicherheitssystemen ist zum Beispiel aus DE 10 2007 049 234 B4 bekannt.

Das bekannte System hat den Nachteil, dass der Tilger fest mit dem Gehäuse bzw. Halteblech vormontiert ist. Hierdurch ist die Herstellung des Fahrzeugsicherheitssystems erschwert, da der Tilger bei weiteren Prozessschritten mit dem Fahrzeugsicherheitssystem verbunden ist.

Beispielsweise kann keine Thermofixierung des Luftsacks mit dem Gehäuse bzw. dem Halteblech durchgeführt werden, da der Tilger nicht in einen hierfür notwendigen Ofen eingebracht werden darf. Der Tilger würde hierdurch beschädigt werden.

Die gattungsgemäße WO 00/15470 A1 offenbart ein Lenkrad mit einem Airbagmodul, das einen Gasgenerator und einen Gassack aufweist sowie durch eine an der Lenkradoberseite vorgesehene Abdeckkappe zum Fahrgastraum hin abgedeckt ist, wobei der Gasgenerator als Schwingungstilger vorgesehen ist, indem er in mindestens einem Element im Airbagmodul gelagert ist, welches bei Schwingungen des Lenkrads elastisch verformbar ist.

Der vorliegenden Erfindung liegt die Aufgabe zugrunde, ein Fahrzeugsicherheitssystem, insbesondere ein Airbagmodul, mit einem Tilger anzugeben, das einfach herstellbar ist. Der Erfindung liegt ferner die Aufgabe zu Grunde, ein Verfahren zum Herstellen eines Fahrzeugsicherheitssystems anzugeben.

Erfindungsgemäß wird diese Aufgabe mit Blick auf das Fahrzeugsicherheitssystem durch den Gegenstand des Anspruchs 1 bzw. mit Blick auf das Verfahren zur Herstellung eines solchen Fahrzeugsicherheitssystems durch den Gegenstand des Anspruchs 14 gelöst.

Vorteilhafte Weiterbildungen sind in den abhängigen Patentansprüchen angegeben.

Bei dem erfindungsgemäßen Fahrzeugsicherheitssystem, insbesondere Fahrzeuginsassenschutzsystem, handelt es sich vorzugsweise um ein Airbagmodul, insbesondere ein Fahrerairbagmodul. Das Fahrzeugsicherheitssystem weist Folgendes auf: einen Luftsack, ein Halteblech zur Halterung des Luftsackes, einen Gasgenerator mit einem Generatorflansch und einen Tilger, der mindestens einen Tilgerfuß aufweist, wobei ein freies Ende des Tilgerfußes an dem Generatorflansch befestigbar, insbesondere in den Generatorflansch einklippbar ist, wobei das freie Ende des Tilgerfußes vom Luftsack und/oder vom Halteblech wegweist.

Während bei einem bekannten Fahrzeugsicherheitssystem der Tilger fest zwischen einem Gehäuse bzw. einem Generatorträger und dem Gasgenerator befestigt ist, ist der Tilger bei dem erfindungsgemäßen System nicht fest mit dem Generatorträger (und auch nicht mit dem Luftsack-Halteblech) vormontiert.

Erfindungsgemäß ist der Gasgenerator also hängend mit dem Tilger verbunden, wodurch eine einfache Montageanordnung geschaffen wird, bei der auftretende Vibrationen und Schwingungen optimal durch den Tilger gedämpft werden können.

Auch kann eine Thermofixierung des Luftsacks mit dem Halteblech erfolgen, ohne dass der Tilger (mit Gasgenerator) in den hierfür notwendigen Ofen eingebracht werden müsste.

Der Tilger kann auf einfache Weise nach der Thermofixierung mit dem Halteblech verbunden werden.

Erfindungsgemäß ist ferner ein Generatorträger vorgesehen, wobei der Tilger zwischen dem Halteblech und dem Generatorträger geklemmt ist.

Durch das lösbare Befestigen des Gasgenerators mit dem Tilger kann darüber hinaus und hierauf folgend der Gasgenerator an dem Tilger befestigt werden. Gasgenerator und Tilger können auch als eine vormontierte Baueinheit vorgesehen und im Modul verbaut werden.

Gemäß einer bevorzugten Ausführungsform ist ferner vorgesehen, dass der Tilger an dem Halteblech befestigbar oder befestigt, insbesondere in das Halteblech einklippbar oder eingeklippt ist, und/oder wobei der Tilger aus einer Mehrzahl von, vorzugsweise von unter einander unverbundenen Tilgerfüßen besteht.

Bei entsprechender Wartung kann der Gasgenerator in umgekehrter Weise von dem Tilger getrennt werden und beispielsweise separat auf seine Funktionsweise überprüft werden.

Auch kann nach dem Entfernen des Gasgenerators der Tilger auf einfache Weise von dem Fahrzeugsicherheitssystem getrennt werden und auf seine Funktionsweise überprüft werden. Somit ist eine Wartung des Fahrzeugsicherheitssystems vereinfacht. Außerdem ist eine Reparatur des Fahrzeugsicherheitssystems vereinfacht, da Einzelkomponenten (Tilger, Gasgenerator) leicht ausgetauscht werden können.

Das Halteblech kann als Diffusor ausgebildet sein, wodurch dieses eine Doppelfunktion erfüllt. Der Tilger ist hängend an dem Diffusor befestigt. Bei dieser Ausführungsform weist das Halteblech eine Vielzahl von Gasdurchströmöffnungen auf und/oder ist von dem Gasgenerator sowie von dessen Flansch beabstandet.

Der Tilger ist als Schwingungsdämpfer ausgebildet und kann aus einem geeigneten dämpfenden und elastischen Material ausgebildet sein.

Gemäß einem Aspekt der Erfindung weist der Tilger mindestens einen Tilgerfuß auf und der Gasgenerator weist einen Generatorflansch auf. Der Tilgerfuß ist in den Generatorflansch einklippbar.

So ist gemäß einer Ausführungsform vorgesehen, dass der Gasgenerator nach unten hängend an dem mindestens einen Tilgerfuß des Tilgers befestigbar oder befestigt ist.

Gemäß einer Ausführungsform ist der zumindest eine Tilgerfuß mit seinem festen Ende an einem Basisteil des Tilgers befestigt. Der Tilgerfuß kann mit seinem festen Ende aber auch direkt am Halteblech fixiert sein.

Auf diese Weise wird eine besonders einfache Befestigung des Gasgenerators an dem Tilger realisiert. Durch die Tilgerfüße kann eine Bedienperson auf einfache Weise durch Anwendung leichten Drucks den Flansch des Gasgenerators in die Tilgerfüße einklipen.

Zu diesem Zweck weisen die Tilgerfüße an ihrem freien Ende jeweils eine Einbuchtung bzw. Nut auf, die passend zu einem komplementär ausgebildeten Bereich des Generatorflanschs ausgebildet ist.

Gemäß einem weiteren Aspekt der Erfindung ist der Luftsack an dem Halteblech fixiert.

Gemäß einem weiteren Aspekt der Erfindung ist der Generatorflansch unterhalb des Tilgers angeordnet.

Der Begriff "unterhalb" bzw. "unten" bezeichnet eine Richtung, die von dem Luftsack in Richtung des Tilgerfußes bzw. des Gasgenerators zeigt. Der Begriff "oberhalb" bzw. "oben" bezeichnet eine Richtung, die von dem Tilgerfuß bzw. dem Gasgenerator in Richtung des Luftsacks zeigt. Diese Richtungsangaben gelten unabhängig von einer tatsächlichen Einbauposition des Moduls in einem Fahrzeug. So ist der Gasgenerator jedenfalls unterhalb des Luftsackes angeordnet.

Hierdurch ist eine Bedienung bzw. Installation des Gasgenerators erfindungsgemäß vereinfacht. Eine Bedienperson kann auf einfache Weise den Gasgenerator in den Tilger bzw. die Tilgerfüße einklipen, da der Generatorflansch leicht erreichbar ist.

Gemäß einem weiteren Aspekt der Erfindung ist zwischen dem Tilger und dem Gasgenerator ein dämpfender Anschlag vorgesehen.

Hierdurch kann optional eine Dämpfung des Gasgenerators und gleichzeitig eine einfache Befestigung des Gasgenerators an dem Tilger durch das Einklipen der Tilgerfüße in den Generatorflansch realisiert werden.

Der dämpfende Anschlag kann oberhalb des Generatorflanschs angeordnet werden, da dieser unterhalb des Tilgers angeordnet ist. Somit kann zum einen eine Befestigung zwischen den Tilgerfüßen und dem Generatorflansch optimiert werden, und gleichzeitig eine Dämpfung durch das Vorsehen eines dämpfenden Anschlags zwischen dem Tilger und dem Gasgenerator realisiert werden.

Gemäß einem weiteren Aspekt der Erfindung ist zwischen dem Generatorflansch und dem Generatorträger eine Gasabdichtung vorgesehen.

Hierdurch wird verhindert, dass die hängende Befestigung des Gasgenerators an dem Tilger dazu führt, dass bei der Betätigung des Gasgenerators Gas in einer unerwünschten Richtung nicht zum Befüllen des Luftsacks verströmt wird, sondern in die Umgebung verströmt wird.

Gemäß einem weiteren Aspekt der Erfindung ist das Halteblech als Luftsack-Halteblech ausgebildet.

Durch das Ausbilden des Halteblechs als leichtgewichtiges Stahl-oder Kunststoff-Halteblech kann das Gewicht des Fahrzeugsicherheitssystems verringert werden.

Gemäß der Erfindung ist der Tilger zwischen das Halteblech und den Generatorträger geklemmt.

Hierdurch kann der Tilger auf einfache Weise nach der Thermofixierung des Luftsacks an das Halteblech mit dem Fahrzeugsicherheitssystem verbunden werden, indem ein Generatorträger angebracht wird und der Tilger zwischen das Halteblech und den Generatorträger geklemmt wird.

Auch ist gemäß einer Ausführungsform vorgesehen, dass der Luftsack zwischen dem Halteblech und dem Tilger und/ oder zwischen dem Halteblech und dem Generatorträger fixiert, insbesondere geklemmt, ist. Diese Klemmung kann zusäzlich zu einer formschlüssigen Fixierung des Luftsackes (z.B. mittels Bolzen) erfolgen.

Der Generatorträger kann hierbei als Teil des Gehäuses des Fahrzeugsicherheitssystems dienen.

Gemäß einem weiteren Aspekt der Erfindung weist das Halteblech Befestigungsbolzen auf. Die Klemmkraft, die zum Klemmen des Tilgers zwischen den Generatorträger und das Halteblech eingesetzt wird, wird durch Muttern erzeugt, die auf die Befestigungsbolzen des Halteblechs aufgeschraubt sind.

Somit kann die Klemmkraft auf einfache Weise durch Drehen der Muttern festgelegt werden. Somit ist auch ein Lösen des Tilgers leicht möglich, was eine Wartung bzw. Reparatur bzw. einen Austausch des Tilgers und/oder des Gasgenerators erleichtert.

Auch ist gemäß einer Ausführungsform vorgesehen, dass das Halteblech eine Anzahl von Befestigungsbolzen aufweist, und der Generatorträger sowie der Tilger jeweils dieselbe Anzahl von Befestigungsöffnungen aufweisen, durch die die Befestigungsbolzen ragen, und wobei, vorzugsweise, die Anzahl der Befestigungsbolzen der Anzahl der Tilgerfüße entspricht, und wobei, weiter vorzugsweise, die Anzahl "4" beträgt. So kann eine gleichmäßige Befestigung und Aufnahme und Ableitung von (Schwingungs-)kräften erfolgen.

Auch ist gemäß einer Ausführungsform vorgesehen, dass der Tilger ein, im Wesentlichen ringförmiges, Basisteil aufweist, von dem von dem sich der mindestens eine Tilgerfuß erstreckt. Das Basisteil ist insbesondere aus einem, vorzugsweise (bei Raumtemperatur) starren Kunststoff gefertigt. Ebenso ist, vorzugsweise, der mindestens eine Tilgerfuß aus einem Silikonmaterial gefertigt. Tilgerfuß und Basisteil sind insbesondere zu einer einstückigen, nicht - zerstörungsfrei - trennbaren Einheit verbunden.

Nachfolgend wird die Erfindung unter Bezugnahme auf die beiliegende Zeichnung anhand exemplarischer Ausführungsformen des erfindungsgemäßen Fahrzeugsicherheitssystems näher beschrieben.
Mit Blick auf das Herstellungsverfahren wird die Erfindung jeweils durch den Gegenstand des Anspruchs 10 bzw. des Anspruchs 11 gelöst.

Gasgenerator und Tilger können als vormontierte Einheit am dem Halteblech befestigt werden, insbesondere durch Aufstecken des Tilgers auf die Befestigungsbolzen des Haltebleches.

In der Zeichnung zeigt:

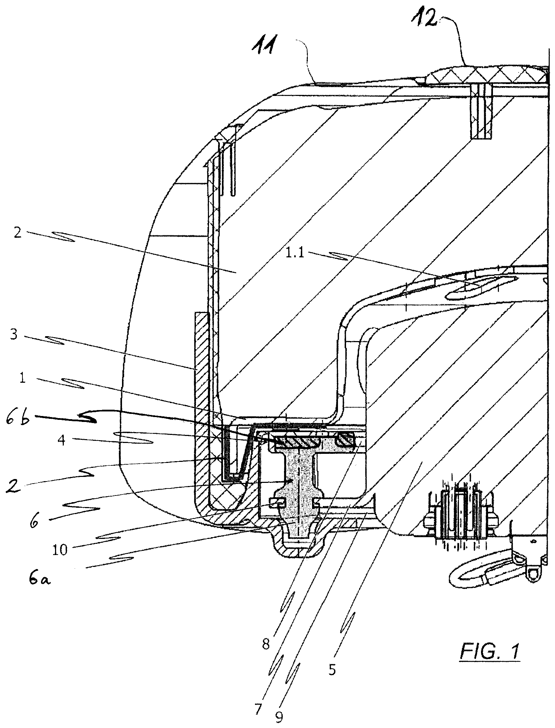

- Fig. 1:: eine Querschnittsansicht einer Ausführungsform des erfindungsgemäßen Fahrzeugsicherheitssystems.

Fig. 1 zeigt ein Fahrzeugsicherheitssystem, wobei das System einen Luftsack 2 aufweist.

Der Luftsack 2 kann über einen Gasgenerator 5 mit Gas gefüllt werden. Der Gasgenerator 5 enthält beispielsweise einen pyrotechnischen Treibsatz zur Erzeugung von Heißgas. Optional kann der Gasgenerator 5 auch ein Kühlsystem aufweisen.

Der Luftsack 2 ist durch seine Thermofixierung an einem Halteblech 1 befestigt; das Halteblech kann aber auch nur in den Luftsack eingeschoben sein, und/ oder durch daran ausgebildete Befestigungsbolzen, die in im Luftsack ausgebildete Löcher gesteckt sind, lagepositioniert sein.

Das Halteblech 1 weist Öffnungen 1.1 auf, über die Gas von dem Gasgenerator 5 in der Luftsack 2 gelangen kann. Oberhalb des Luftsackes 2 ist eine Luftsackabdeckung 11, vorzugsweise mit einem Emblem 12 angeordnet.

Der Luftsack 2 besteht aus einem Garn, einer Faser oder einem Zwirn, der/die aus einer Chemiefaser besteht. Hierbei wird vorzugsweise eine Synthesefaser verwendet, wobei besonders bevorzugt Polyester, Polyamid oder Elastan zum Einsatz kommt.

Der Luftsack 2 wird über das Halteblech 1 gestreift und zusammen mit dem Halteblech 1 zumindest bereichsweise in einen Ofen eingebracht. Der Ofen erhitzt den Luftsack 2 sowie das Halteblech 1, wodurch der Luftsack 2 einer Wärmebehandlung unterzogen wird. Nach einer anschließenden Kältebehandlung wird so eine Lagefixierung zwischen dem Luftsack 2 und dem Halteblech 1 hergestellt..

Die Erwärmung dient der Dimensionsstabilität des Luftsacks 2, wobei zur Erwärmung des Luftsacks 2 je nach Material Heißwasser, Wasserdampf oder Trockenhitze zum Einsatz kommen kann.Hierdurch wird eine spätere Veränderung der Gestalt des Luftsacks 2 verhindert.

Nach der (optionalen) Thermofixierung des Luftsacks 2 wird ein Tilger 4 zwischen dem Generatorträger 3 und dem Halteblech 1 eingeklemmt. Der Generatorträger 3 kann auf geeignete Weise mit dem Halteblech 1 verbunden werden.

Zum Einklemmen des Tilgers 4 zwischen den Generatorträger 3 und das Halteblech 1 sind an dem Halteblech 1 vorzugsweise Befestigungsbolzen (nicht dargestellt) angeordnet, die durch entsprechende Löcher im Luftsackmund gesteckt sind.

Auf die Bolzen wird sodann ein Basisabschnitt 6b des Tilgers 6, in dem korrespondierende Löcher ausgebildet sind, aufgeschoben, wobei eine Lage des Luftsackes 2 zwischen dem Halteblech und dem Tilger 6 zu liegen kommt.

Sodann wird der Generatorträger 3 ebenfalls auf die Bolzen gesteckt, bevor durch das Anziehen von Muttern (nicht dargestellt), die auf die Halteblechbolzen aufgeschraubt sind, diese Anordnung fixiert wird. Auch kann Höhe der Klemmkraft eingestellt werden kann, mit der der Tilger 4 (und der Luftsack 2) zwischen den Generatorträger 3 und das Halteblech 1 eingeklemmt wird.

Somit wird hierdurch das Halteblech 1 und der Luftsack 2 mit dem Tilger 4 sowie dem Generatorträger 3 verbunden.

Hierauf folgend wird der Gasgenerator 5 an dem Fahrzeugsicherheitssystem befestigt. Hierzu weist der Tilger 4 Tilgerfüße 6 auf, die sich von dem Basisteil 6b des Tilgers 6 (bzw. dem Luftsack 2) weg nach unten hin erstrecken.

Der Gasgenerator 5 weist einen Generatorflansch 7 auf, der unterhalb des Tilgers 4, gesehen von dem Luftsack 2 in Richtung nach unten (der Erstreckungsrichtung der Tilgerfüße 6), ausgebildet ist.

Der Generatorflansch 7 greift in eine Nut 10 bzw. eine Ausbuchtung 10 ein, die im Bereich des jeweils freien Endes 6a der Tilgerfüße 6 angeordnet ist.

Der Generatorflansch 7 ist im Bereich der Nut 10 komplementär zur Nut 10 ausgebildet, sodass der Tilgerfuß 6 in den Generatorflansch 7 eingeklipt werden kann.

Hierdurch wird eine (bei Bedarf lösbare) Verbindung zwischen dem Tilger 4 und dem Gasgenerator 5 hergestellt.

Auch hängt der Gasgenerator 5 mittels seines Generatorflanschs 7 an dem Tilgerfuß 6.

Um zu verhindern, dass aufgrund zum Beispiel eines Motorbetriebs in einem Kraftfahrzeug der Gasgenerator an andere Komponenten des Modulsanschlägt und diese oder sich beschädigt, ist zwischen dem Tilger 4 und dem Gasgenerator 5 weiterhin ein dämpfender Anschlag 8 angeordnet.

Der dämpfende Anschlag 8 ist oberhalb (und/ oder unterhalb) des Generatorflanschs 7 angeordnet. Er begrenzt die Schwingamplitude und dämpft dabei das Anschlagen (Geräusche) des Gasgenerators 5, wenn er vibriert bzw. in Schwingung versetzt wird, .

Die Clip-Verbindung zwischen dem Tilger 4 und dem Gasgenerator 5, genauer zwischen dem Tilgerfuß 6 und dem Generatorflansch 7 ist derart vorgesehen, dass der Gasgenerator 5 auf einfache Weise mit dem Tilger 4 verbunden werden kann, wobei der Tilger 4 nicht an dem Halteblech 1 vormontiert ist, sondern zwischen dem Generatorträger 3 und dem Halteblech 1 eingeklemmt ist.

Somit kann der Gasgenerator 5 durch Lösen der Clip-Verbindung von dem Fahrzeugsicherheitssystem getrennt werden und hierauf folgend der Tilger 4 durch Lösen der Klemmung von dem Fahrzeugsicherheitssystem gelöst werden.

Die Erfindung ist nicht auf die in der Zeichnung dargestellte Ausführungsform des erfindungsgemäßen Fahrzeugsicherheitssystems beschränkt, sondern ergibt sich aus einer Zusammenschau sämtlicher hierin offenbarer Merkmale.

So ist gemäß einer alternativen Ausführungsform auch denkbar, dass die der Tilger 4 durch einzelne, von einander getrennte (der miteinander verbundene) Tilgerfüße 6 gebildet ist und, dass diese direkt am Halteblech 2 befestigt sind, insbesondere in dieses eingeklippt sind.

Hinsichtlich eines Verfahrensaspektes wird die Aufgabe erfindungsgemäß gelöst durch ein Verfahren zur Herstellung eines Fahrzeugsicherheitssystem, insbesondere eines Airbagmoduls nach der zuvor beschriebenen Art, wobei folgende Verfahrensschritte vorgesehen sind: Bereitstellen eines Halteblechs sowie eines Luftsacks; Positionieren des Halteblechs im Luftsack; Befestigen, vorzugsweise Klemmen, eines Tilgers zwischen einem Generatorträger und dem Halteblech, wobei der Gasgenerator hängend und vorzugsweise zerstörungsfrei lösbar an dem Tilger befestigt wird.

Vorzugsweise wird hierbei der Gasgenerator und der Tilger als vormontierte Baueinheit an dem Halteblech angeordnet, insbesondere auf Bolzen des Halteblechs aufgesteckt.

Weiter vorzugsweise weist der Tilger mindestens einen Tilgerfuß aufweist und der Gasgenerator einen Generatorflansch auf, und der Tilgerfuß wird an den Generatorflansch geklipst, insbesonder vor dem Schritt der Montage des Tilgers an anderen Komponentes des Airbagmoduls.

### Bezugszeichenliste:

- 1: Halteblech
- 1.1: Öffnung
- 2: Luftsack
- 3: Generatorträger
- 4: Tilger
- 4a: Basisteil
- 5: Gasgenerator
- 6: Tilgerfuß
- 6a: freies Ende
- 7: Generatorflansch
- 8: dämpfender Anschlag
- 9: Gasdichtung
- 10: Nut/Ausbuchtung
- 11: Airbagabdeckung
- 12: Emblem

## Patentansprüche

1. Fahrzeugsicherheitssystem, insbesondere Airbagmodul, welches Folgendes aufweist:
einen Luftsack (2),
ein Halteblech (1) zur Halterung des Luftsackes (2),
einen Gasgenerator (5) mit einem Generatorflansch (7),
einen Tilger (4), der mindestens einen Tilgerfuß (6) aufweist, wobei ein freies Ende (6a) des Tilgerfußes (6) an dem Generatorflansch (7) befestigbar, insbesondere in den Generatorflansch (7) einklippbar ist, und
einen Generatorträger (3),
wobei das freie Ende (6a) des Tilgerfußes (6) vom Luftsack (2) und/oder vom Halteblech (1) wegweist,
**dadurch gekennzeichnet, dass** der Tilger (4) zwischen dem Halteblech (1) und dem Generatorträger (3) geklemmt ist.

2. Fahrzeugsicherheitssystem nach Anspruch 1, wobei der Tilger (4) an dem Halteblech (1) befestigbar oder befestigt, insbesondere in das Halteblech (1) einklippbar oder eingeklippt ist.

3. Fahrzeugsicherheitssystem nach einem der vorherigen Ansprüche, wobei der Tilger (4) aus einer Mehrzahl von, vorzugsweise untereinander unverbundenen, Tilgerfüßen (6) besteht.

4. Fahrzeugsicherheitssystem nach einem der vorherigen Ansprüche, wobei der Gasgenerator (5) nach unten hängend an dem mindestens einen Tilgerfuß (6) des Tilgers (4) befestigbar oder befestigt ist.

5. Fahrzeugsicherheitssystem nach einem der vorherigen Ansprüche, wobei der Luftsack (2) an dem Halteblech (1) durch eine Thermofixierung fixiert ist.

6. Fahrzeugsicherheitssystem nach einem der vorherigen Ansprüche, wobei der Generatorflansch (7) unterhalb des Tilgers (4) angeordnet ist.

7. Fahrzeugsicherheitssystem nach einem der vorherigen Ansprüche, wobei der Luftsack (2) zwischen dem Halteblech (1) und dem Tilger (4) und/oder zwischen dem Halteblech (2) und dem Generatorträger (3) fixiert, insbesondere geklemmt, ist.

8. Fahrzeugsicherheitssystem nach einem der vorherigen Ansprüche, wobei das Halteblech (1) eine Anzahl von Befestigungsbolzen aufweist, und wobei der Generatorträger (3) sowie der Tilger (4) jeweils dieselbe Anzahl von Befestigungsöffnungen aufweisen, durch die die Befestigungsbolzen ragen, und wobei, vorzugsweise, die Anzahl der Befestigungsbolzen der Anzahl der Tilgerfüße (6) entspricht, und wobei, weiter vorzugsweise, die Anzahl 4 beträgt.

9. Fahrzeugsicherheitssystem nach einem der vorherigen Ansprüche, wobei zwischen dem Tilger (4) und dem Gasgenerator (5) ein dämpfender Anschlag (8) vorgesehen ist.

10. Fahrzeugsicherheitssystem nach einem der vorherigen Ansprüche, wobei zwischen dem Generatorflansch (7) und dem Generatorträger (3) eine Gasabdichtung (9) vorgesehen ist.

11. Fahrzeugsicherheitssystem nach einem der vorherigen Ansprüche, wobei der Tilger (4) ein, im Wesentlichen ringförmiges, Basisteil (4a) aufweist, von dem von dem sich der mindestens eine Tilgerfuß (6) erstreckt, wobei das Basisteil (4a) aus einem Kunststoff gefertigt ist, wobei der mindestens eine Tilgerfuß (6) aus einem Silikonmaterial gefertigt ist, und wobei Tilgerfuß (6a) und Basisteil (4b) zu einer einstückigen, nicht - zerstörungsfrei - trennbaren Einheit verbunden sind.

12. Fahrzeugsicherheitssystem nach einem der vorherigen Ansprüche, wobei das Halteblech (1) eine Vielzahl von Gasdurchströmöffnungen (1.1) aufweist.

13. Fahrzeugsicherheitssystem nach einem der vorherigen Ansprüche, wobei das Halteblech von dem Gasgenerator (5) sowie von dessen Flansch (7) beabstandet ist.

14. Verfahren zur Herstellung eines Fahrzeugsicherheitssystems, insbesondere eines Airbagmoduls, nach einem der voranstehenden Ansprüche, wobei folgende Verfahrensschritte vorgesehen sind:
Bereitstellen eines Halteblechs (1) sowie eines Luftsacks (2);
Positionieren des Halteblechs (1) in dem Luftsack (2);
Befestigen, vorzugsweise Klippen, eines Tilgers (4) an einen Gasgenerator (5) vor einem Schritt des Klemmens des Tilgers (4) zwischen einem Generatorträger (3) und dem Halteblech (1) derart, dass der Gasgenerator (5) nach unten hängend mit dem Tilger (4) befestigt wird.

## Claims

1. A vehicle safety system, especially an airbag module, comprising:
an airbag (2),
a retaining plate (1) for retaining the airbag (2),
an inflator (5) comprising an inflator flange (7),
a damper (4) having at least one damper base (6), a free end (6a) of the damper base (6) being adapted to be mounted on the inflator flange (7), especially to be clipped into the inflator flange (7), and
an inflator support (3),
wherein the free end (6a) of the damper base (6) points away from the airbag (2) and/or from the retaining plate (1),
**characterized in that** the damper (4) is clamped between the retaining plate (1) and the inflator support (3).

2. The vehicle safety system according to claim 1, wherein the damper (4) can be or is mounted on the retaining plate (1), especially can be or is clipped into the retaining plate (1).

3. The vehicle safety system according to any one of the preceding claims, wherein the damper (4) is made from a plurality of damper bases (6) that are preferably not interconnected.

4. The vehicle safety system according to any one of the preceding claims, wherein the inflator (5) can be or is mounted on the at least one damper base (6) of the damper (4) while being downwards suspended.

5. The vehicle safety system according to any one of the preceding claims, wherein the airbag (2) is fixed to the retaining plate (1) by thermal fixation.

6. The vehicle safety system according to any one of the preceding claims, wherein the inflator flange (7) is disposed below the damper (4).

7. The vehicle safety system according to any one of the preceding claims, wherein the airbag (2) is fixed, especially clamped, between the retaining plate (1) and the damper (4) and/or between the retaining plate (1) and the inflator support (3).

8. The vehicle safety system according to any one of the preceding claims, wherein the retaining plate (1) includes a number of mounting bolts, and wherein each of the inflator support (3) and the damper (4) includes the same number of mounting holes through which the mounting bolts protrude, and wherein preferably the number of the mounting bolts corresponds to the number of the damper bases (6), and wherein, further preferred, the number is 4.

9. The vehicle safety system according to any one of the preceding claims, wherein a damping stop (8) is provided between the damper (4) and the inflator (5).

10. The vehicle safety system according to any one of the preceding claims, wherein a gas seal (9) is provided between the inflator flange (7) and the inflator support (3).

11. The vehicle safety system according to any one of the preceding claims, wherein the damper (4) includes a, substantially annular, base member (4a) from which the at least one damper base (6) extends, the base member (4a) being made from plastic material, the at least one damper base (6) being made from silicone material, and the damper base (6a) and the base member (4b) being connected to form an integral unit which cannot be separated in a non-destructive manner.

12. The vehicle safety system according to any one of the preceding claims, wherein the retaining plate (1) includes a plurality of gas flow orifices (1.1).

13. The vehicle safety system according to any one of the preceding claims, wherein the retaining plate is spaced apart from the inflator (5) as well as from the flange (7) thereof.

14. A method for the manufacture of a vehicle safety system, especially an airbag module, according to any one of the preceding claims, with the following method steps being provided:
providing a retaining plate (1) as well as an airbag (2);
positioning the retaining plate (1) within the airbag (2);
mounting, especially clipping, a damper (4) onto an inflator (5) prior to a step of clamping the damper (4) between an inflator support (3) and the retaining plate (1) so that the inflator (5) is mounted, while being downwards suspended, with the damper (4).

## Revendications

1. Système de sécurité de véhicule, en particulier un module airbag, comprenant les éléments suivants :
un coussin gonflable (2),
une plaque de maintien (1) pour maintenir le coussin gonflable (2),
un générateur de gaz (5) avec un flasque de générateur (7), un amortisseur (4), qui possède au moins un pied d'amortissement (6), pour lequel une extrémité libre (6a) des pieds d'amortissement(6) sont fixables au flasque du générateur (7), en particulier clipsables dans le flasque du générateur (7), et
un support de générateur (3),
pour lequel l'extrémité libre (6a) des pieds d'amortissement (6) partent du coussin gonflable (2) et / ou de la plaque de retenue (1), **caractérisée en ce que** l'amortisseur (4) est serré entre la plaque de retenue (1) et le support de générateur (3).

2. Système de sécurité de véhicule selon la revendication 1, pour lequel l'amortisseur (4) est fixable ou fixé à la plaque de retenue (1), en particulier clipsable ou clipsé dans la plaque de retenue (1).

3. Système de sécurité de véhicule selon l'une des revendications précédentes, pour lequel l'amortisseur (4) est constitué d'une pluralité de pieds d'amortissement (6) de préférence non reliés les uns aux autres.

4. Système de sécurité de véhicule selon l'une des revendications précédentes, pour lequel le générateur de gaz (5) est fixable ou fixé suspendu à au moins un pied d'amortissement (6) de l'amortisseur.

5. Système de sécurité de véhicule selon l'une des revendications précédentes, pour lequel l'airbag (2) est fixé à la plaque de maintien (1) par fixation thermique.

6. Système de sécurité de véhicule selon l'une des revendications précédentes, pour lequel le flasque de générateur (7) est située sous l'amortisseur (4).

7. Système de sécurité de véhicule selon l'une des revendications précédentes, pour lequel le coussin gonflable (2) est fixé, plus particulièrement serré, entre la plaque de retenue (1) et l'amortisseur (4) et/ou entre la plaque de retenue (2) et le support de générateur (3).

8. Système de sécurité de véhicule selon l'une des revendications précédentes, pour lequel la plaque de retenue (1) comporte un certain nombre de boulons de fixation, et pour lequel le support de générateur (3) et l'amortisseur (4) ont chacun le même nombre de trous de fixation à travers lesquels les boulons de fixation s'engagent, et pour lequel, plus particulièrement, le nombre de boulons de fixation correspond au nombre de pied d'amortissement (6), et pour lequel, plus préférablement, le nombre est 4.

9. Système de sécurité de véhicule selon l'une des revendications précédentes, pour lequel une butée d'amortissement (8) est prévue entre l'amortisseur (4) et le générateur de gaz (5).

10. Système de sécurité de véhicule selon l'une des revendications précédentes, pour lequel un joint d'étanchéité étanche au gaz (9) est prévu entre le flasque du générateur (7) et le support de générateur (3).

11. Système de sécurité de véhicule selon l'une des revendications précédentes, pour lequel l'amortisseur (4) possède une partie de base (4a) sensiblement annulaire, à partir de laquelle s'étend au moins un pied d'amortissement (6), pour lequel la partie de base (4a) est réalisée dans un matériau plastique, pour lequel les, au moins un, pieds d'amortissement (6) sont constitués d'un matériau à base de silicone, et pour lequel le pied d'amortissement (6a) et la partie de base (4b) sont reliés pour former une unité monobloc, séparable de manière non destructive.

12. Système de sécurité de véhicule selon l'une des revendications précédentes, pour lequel la plaque de retenue (1) présente une pluralité d'ouvertures d'écoulement de gaz (1.1).

13. Système de sécurité de véhicule selon l'une des revendications précédentes, pour lequel la plaque de retenue est espacée du générateur de gaz (5) ainsi que du flasque (7).

14. Procédé de fabrication d'un système de sécurité de véhicule, en particulier d'un module airbag, selon l'une des revendications précédentes, pour lequel sont prévues les étapes de fabrication suivantes :
Mettre à disposition une plaque de retenue (1) ainsi qu'un coussin gonflable (2) ;
Positionner la plaque de retenue (1) dans le coussin gonflable (2) ;
Fixer, de préférence par clipsage, un amortisseur (4) à un générateur de gaz (5) avant une étape de serrage de l'amortisseur (4) entre un support de générateur (3) et la plaque de retenue (1) de telle sorte que le générateur de gaz (5) est suspendu à l'amortisseur (4).
